# EUROPEAN PATENT APPLICATION

(11) **EP 3 745 650 A1**
(43) Date of publication of application: **02.12.2020**
(21) Application number: 20176779.5
(22) Date of filing: 27.05.2020
(51) Int. Cl.: H04L 12/24, G06Q 10/10

(54) **METHOD AND DEVICE FOR NOTIFYING EVENT**

(30) Priority: 29.05.2019 KR 20190062945
(71) Applicant: Samsung SDS Co., Ltd., Songpa-gu, Seoul (KR)
(72) Inventor: Kim, Se Jin, Seoul (KR)
(74) Representative: Glawe, Delfs, Moll

(57) **Abstract**

A method according to an aspect of the present disclosure includes obtaining metadata about the event that has occurred, verifying conditions for sending a message related to the event with reference to a value of the metadata, and determining a target recipient to receive the message among a plurality of layers depending on a result of verifying the conditions. When a first condition for sending a lower level message related to the event is achieved, a first layer of the plurality of layers is determined as the target recipient, and when a second condition for sending a higher level message of the lower level message is achieved, a second layer, which is a higher layer of the first layer, of the plurality of layers, is determined as the target recipient.

## Description

### CROSS REFERENCE TO RELATED APPLICATIONS AND CLAIM OF PRIORITY

This application claims the benefit of Korean Patent Application No. 10-2019-0062945, filed on May 29, 2019, in the Korean Intellectual Property Office, the disclosure of which is incorporated herein by reference in its entirety.

### BACKGROUND

### 1. Field

The present inventive concept relates to a method and device for notifying an event. More specifically, it relates to a method and system for notifying an event that monitors an externally occurred event and notifies a client terminal of the event.

### 2. Description of the Related Art

Monitoring manners for collecting and notifying event information in real time on various troubles, failures, and operations occurring in a system are widely used for the stable maintenance of the system. These monitoring manners include a basic cycle of event management as follows. When a specific event occurs, contents of the event are checked and a ticket for management thereof is issued. Then, it notifies a designated person in charge to handle the event that occurred. Next, the issued ticket issued will be finished or ended after the designated person in charge has completed actions related to the event. Recently, monitoring manners have been developed in such a way that related people may share collected information in real time and discuss their opinions directly in a collaborative tool, by creating the collaboration tool (for example, a chat room) through a messenger by people related to work, and automatically notifying the collected event information to the collaboration tool.

However, in the case of a situation where a large number of events occur for the same phenomenon, such as a network error or a function stop due to an emergency operation, a large amount of messages continuously flows into the collaboration tool to occupy a screen. As a result, it acts as message pollution, making it inefficient for the related people to grasp or discuss necessary information.

### SUMMARY

Aspects of the inventive concept provide a method for notifying an event that increases the efficiency of information transmission, by preventing unnecessary event information from entering into a collaborative tool and exposing only event information necessary for people related to work, and a computing device or computing system to which the method is applied.

However, aspects of the present invention are not restricted to those set forth herein. The above and other aspects of the present invention will become more apparent to one of ordinary skill in the art to which the present invention pertains by referring to the detailed description of the present invention given below.

According to aspects of the present disclosure, there is provided a method for notifying an event, the method is performed by a computing device and comprises obtaining metadata about the event that has occurred, verifying conditions for sending a message related to the event with reference to a value of the metadata, and determining a target recipient to receive the message among a plurality of layers depending on a result of verifying the conditions, wherein when a first condition for sending a lower level message related to the event is achieved, a first layer of the plurality of layers is determined as the target recipient, and wherein when a second condition for sending a higher level message of the lower level message is achieved, a second layer, which is a higher layer of the first layer, of the plurality of layers, is determined as the target recipient.

According to aspects of the present disclosure, there is provided a device for notifying an event, the device comprises a processor, a memory to load a computer program executed by the processor, and a storage to store the computer program, wherein the computer program comprises instructions to perform actions: to obtain metadata about the event that has occurred, to verify conditions for sending a message related to the event with reference to a value of the metadata, and to determine a target recipient to receive the message among a plurality of layers depending on a result of verifying the conditions, wherein when a first condition for sending a lower level message related to the event is achieved, a first layer of the plurality of layers is determined as the target recipient, and wherein when a second condition for sending a higher level message of the lower level message is achieved, a second layer, which is a higher layer of the first layer, of the plurality of layers, is determined as the target recipient.

According to aspects of the present disclosure, there is provided a computer program stored on a computer readable recording medium, the computer program is combined with a computing device to perform a method for notifying an event, wherein the method comprises obtaining metadata about the event that has occurred, verifying conditions for sending a message related to the event with reference to a value of the metadata, and determining a target recipient to receive the message among a plurality of layers depending on a result of verifying the conditions, wherein when a first condition for sending a lower level message related to the event is achieved, a first layer of the plurality of layers is determined as the target recipient, and wherein when a second condition for sending a higher level message of the lower level message is achieved, a second layer, which is a higher layer of the first layer, of the plurality of layers, is determined as the target recipient.

According to embodiments of the inventive concept, the amount of messages received by each layer may be reduced, and only information that the layer needs to know may be selectively exposed by selectively sending a message for the occurrence of an event depending on a hierarchy of a target recipient.

Accordingly, removing the inefficiency caused by the influx of a large amount of unnecessary messages, it is possible to obtain a benefit of significantly improving readability and concentration for messages containing necessary information.

### BRIEF DESCRIPTION OF THE DRAWINGS

These and/or other aspects will become apparent and more readily appreciated from the following description of the embodiments, taken in conjunction with the accompanying drawings in which:
FIG. 1 is a configuration diagram of a device for notifying an event according to an embodiment of the present invention;
FIG. 2 is a flowchart of a method for notifying an event according to the embodiment of the present invention;
FIG. 3 is a flowchart embodying step S110 of FIG. 2 according to the embodiment of the present invention;
FIG. 4 is a flowchart embodying step S130 of FIG. 2 according to the embodiment of the present invention;
FIG. 5 is a flowchart embodying step S170 of FIG. 2 according to the embodiment of the present invention;
FIGS. 6 and 7 are diagrams conceptually illustrating an actual implementation of the method for notifying the event according to the embodiment of the present invention;
FIG. 8 is a diagram illustrating a vertical hierarchical structure of a target recipient referred to in some embodiments of the present invention;
FIG. 9 is a view illustrating a horizontal classification structure of the target recipient according to the embodiment of the present invention;
FIG. 10 is a diagram illustrating a composite classification structure in which the vertical hierarchy structure of FIG. 8 and the horizontal classification structure of FIG. 9 are applied together;
FIG. 11 is a flowchart embodying step S150 of FIG. 2 according to some embodiments of the present invention; and
FIG. 12 is a hardware configuration diagram of a device for notifying an event according to another embodiment of the present invention.

### DETAILED DESCRIPTION

Hereinafter, preferred embodiments of the present disclosure will be described with reference to the attached drawings. Advantages and features of the present disclosure and methods of accomplishing the same may be understood more readily by reference to the following detailed description of preferred embodiments and the accompanying drawings. The present disclosure may, however, be embodied in many different forms and should not be construed as being limited to the embodiments set forth herein. Rather, these embodiments are provided so that this disclosure will be thorough and complete and will fully convey the concept of the disclosure to those skilled in the art, and the present disclosure will only be defined by the appended claims.

In adding reference numerals to the components of each drawing, it should be noted that the same reference numerals are assigned to the same components as much as possible even though they are shown in different drawings. In addition, in describing the present invention, when it is determined that the detailed description of the related well-known configuration or function may obscure the gist of the present invention, the detailed description thereof will be omitted.

Unless otherwise defined, all terms used in the present specification (including technical and scientific terms) may be used in a sense that can be commonly understood by those skilled in the art. In addition, the terms defined in the commonly used dictionaries are not ideally or excessively interpreted unless they are specifically defined clearly. The terminology used herein is for the purpose of describing particular embodiments only and is not intended to be limiting of the invention. In this specification, the singular also includes the plural unless specifically stated otherwise in the phrase.

In addition, in describing the component of this invention, terms, such as first, second, A, B, (a), (b), can be used. These terms are only for distinguishing the components from other components, and the nature or order of the components is not limited by the terms. If a component is described as being "connected," "coupled" or "contacted" to another component, that component may be directly connected to or contacted with that other component, but it should be understood that another component also may be "connected," "coupled" or "contacted" between each component.

Hereinafter, some embodiments of the present invention will be described in detail with reference to the accompanying drawings.

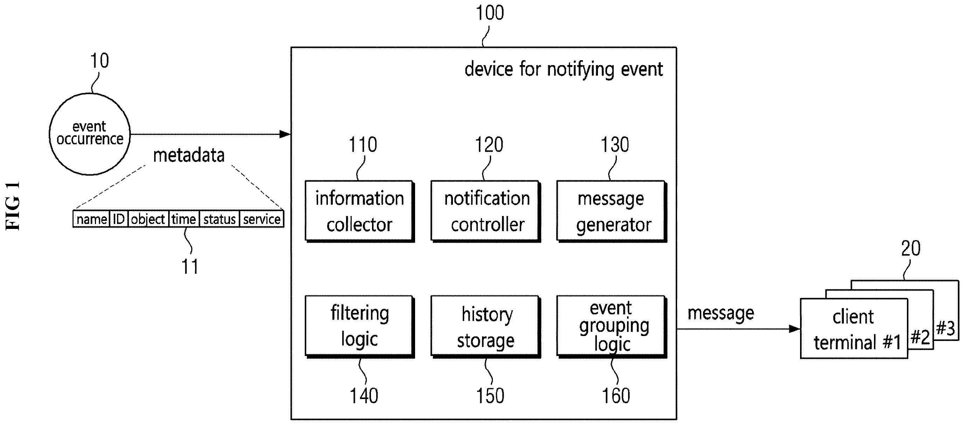

First, the configuration and operation of a program analysis system according to some embodiments of the present invention will be described with reference to FIGS. 1 to 5.

FIG. 1 is a configuration diagram of a device for notifying an event according to an embodiment of the present invention. As an embodiment, the device 100 for notifying the event of FIG. 1 may be a configuration of a device for monitoring an event to monitor a trouble, operation, or status of an external system and to notify a client terminal 20 of information thereon.

As shown in FIG. 1, the device 100 for notifying the event according to the embodiment may include an information collector 110, a notification controller 120, a message generator 130, a filtering logic 140, a history storage 150, and an event grouping logic 160. In addition, the device 100 for notifying the event receives metadata 11 of a occurred event with respect to external event occurrence 10. Then, a notification message related to the event occurrence 10 is sent to the client terminal 20.

The information collector 110 receives the metadata 11 from the outside, detects the external event occurrence 10, and refers to data of each field in the metadata 11 to selectively store the metadata 11 in the history storage 150. Specifically, the information collector 110 first filters unnecessary event information through the filtering logic 140, and stores only the metadata 11 for valid events in the history storage 150.

For example, it is assumed that the metadata 11 includes six fields of 'grade,' 'ID,' 'object,' 'occurrence time (time),' 'status,' and 'service category (service).' Here, if it is set to notify a relevant message to the client terminal 20 only when the 'grade' of the event that occurred is urgent, the filtering logic 140 stores only the metadata of a 'emergency' grade in the history storage 150 and filters the metadata which is not the 'emergency' grade. Filtering conditions through the filtering logic 140 may be applied by overlapping a plurality of conditions. For example, if a condition in which a 'service category' field is 'database' added as the filtering condition, only the metadata whose 'service category' field is 'database' among the metadata having the 'urgent' grade is stored in the history storage 150 and the remaining metadata may be filtered.

By filtering out unnecessary metadata 11 or event information in advance through this filtering function, parameters of a target event to be processed by the notification controller 120 may be reduced, and thus, the load of the system may be reduced.

Here, the metadata stored in the history storage 150 may be all of the metadata 11 received in relation to the event occurrence 10 or only a part of the received metadata (some fields such as ID, service, or the like).

When the metadata 11 is received through the information collector 110, the notification controller 120 verifies conditions for sending a message related to the event occurrence 10 to the client terminal 20 by referring to each field value of the metadata 11. Then, it determines to which layer of a plurality of layers the message related to the event occurrence 10 is to be sent, i.e., which of the plurality of layers is selected as a target recipient.

Here, there may be a vertical hierarchical relationship between the plurality of layers. For example, a first layer which is the lowest layer is a hierarchical level of personnel in charge and may be configured to include only those who directly perform and process a corresponding task. The second layer, which is a higher layer of the first layer, is a department level layer to which the personnel of the first layer belong, and may be configured to include related task managers belonging to the department and task managers of the department, in addition to those of the first layer. In this way, a third layer, which is an upper department level including the department members of the second layer, and a fourth layer, which is the entire organization level including the third layer, may be further vertically configured.

Under this hierarchical structure, the notification controller 120 verifies in detail which message notification condition is achieved by referring to each field value of the metadata 11, and determines the target recipient such that only a layer suitable for receiving a message related to the achieved condition among the plurality of layers is received depending on the achieved condition.

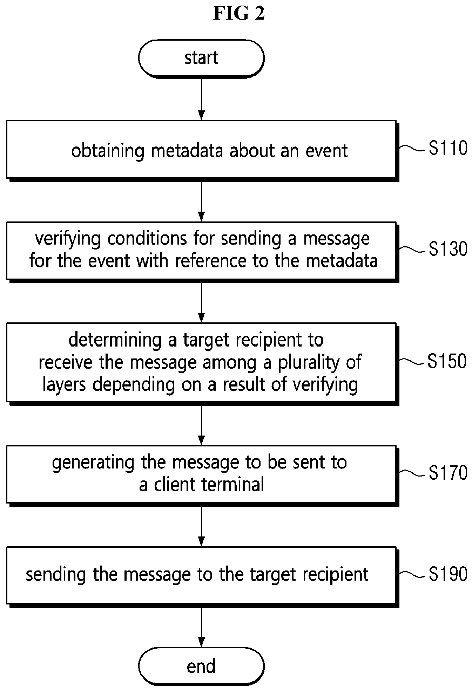

For example, when the ID and object field values of the metadata 11 are checked, and it is verified that a condition of 'new event occurrence' is achieved, a message notifying the occurrence of such a new event is a lower level message to be delivered to the level of the person in charge who will directly perform the relevant processing. Therefore, the notification controller 120 determines the first layer as the target recipient. As another example, when the ID, object, time, and status field values of the metadata 11 are verified, and it is verified that a condition of 'unprocessed status for more than 60 minutes after a specific event occurs' has been achieved, a message notifying that such an event is not processed is a higher level message that is notified to the second layer which is a higher level, i.e., the department level, and that a follow-up action should be discussed. Therefore, the notification controller 120 determines the second layer as the target recipient. More detailed information on a method for verifying the conditions for the notification controller 120 to send the message and a method for determining the target recipient of the message will be described below with reference to FIG. 2 and the following drawings.

The message generator 130 generates a message sent to the client terminal 20. The message generated by the message generator 130 may be configured in a different form depending on the condition verified by the notification controller 120 or the determined target recipient. For example, when the target recipient is the first layer which is the lowest layer, the generated message includes only a short message indicating the fact that it occurred as a lower level message. On the contrary, when the target recipient is the second layer which is a higher layer, the generated message may further include a thumbnail or a list showing a related event occurrence history in addition to the short message indicating the fact that it occurred as a higher level message. Here, the message generator 130 reads previous metadata stored in the history storage 150, groups the metadata read through the event grouping logic 160 depending on their attribute values (for example, the metadata having the same service category and object field values as the metadata 11 are grouped into the same group), and may generate the thumbnails or list by referring to the results. More details on how the message generator 130 generates a message will be described below with reference to FIG. 2 and the following drawings.

After the message generator 130 completes the message generation, the device 100 for notifying the event sends the generated message to the previously determined target recipient. Here, the device 100 for notifying the event may send the generated message by notifying or distributing the message to a messenger chat room or a collaborative tool in which the target recipient participates through a messenger program running on the client terminal 20.

According to the device 100 for notifying the event described in the present embodiment, by selectively sending the message for the event occurrence 10 depending on the hierarchy of the target recipient, the amount of messages received by each layer may be reduced, and only information that the layer needs to know may be selectively exposed. Accordingly, removing the inefficiency caused by the influx of a large amount of unnecessary messages, it is possible to obtain a benefit of significantly improving readability and concentration for messages containing necessary information.

Hereinafter, a method for notifying an event in which the device 100 for notifying the event notifies a message for an occurred event to a collaboration tool will be described with reference to FIGS. 2 to 5.

The method for notifying the event according to the present embodiment may be implemented by a computing device. The computing device may be, for example, the device 100 for notifying the event described with reference to FIG. 1. Hereinafter, each operation of the method for notifying the event according to the present embodiment will be described. It should be noted that in the case where there is no mention of the subject of each operation or expressed passively, the subject is the computing device.

FIG. 2 is a flowchart of a method for notifying an event according to the embodiment of the present invention; As an embodiment, the method for notifying the event for FIG. 2 may be a configuration of a method for monitoring an event to monitor a trouble, operation, or status of an external system and to notify the client terminal 20 (see FIG. 1) of information thereon.

As shown in FIG. 2, the method for notifying the event includes five steps of steps S110 to S190.

First, in step S110, metadata on an externally occurred event (see FIG. 1) is obtained. Here, the metadata 11 may include a plurality of fields indicating attributes of an event such as 'grade,' 'ID,' 'object,' 'time,' 'status,' and 'service.' Events that do not need to be notified to the client terminal 20 may be filtered in step S110, and field values of the received metadata 11 may be referenced for this. For example, events in which the 'grade' is not urgent may be filtered because it is determined that notification is unnecessary. The metadata 11 obtained by the information collector 110 is stored in the history storage 150 for subsequent use or processing.

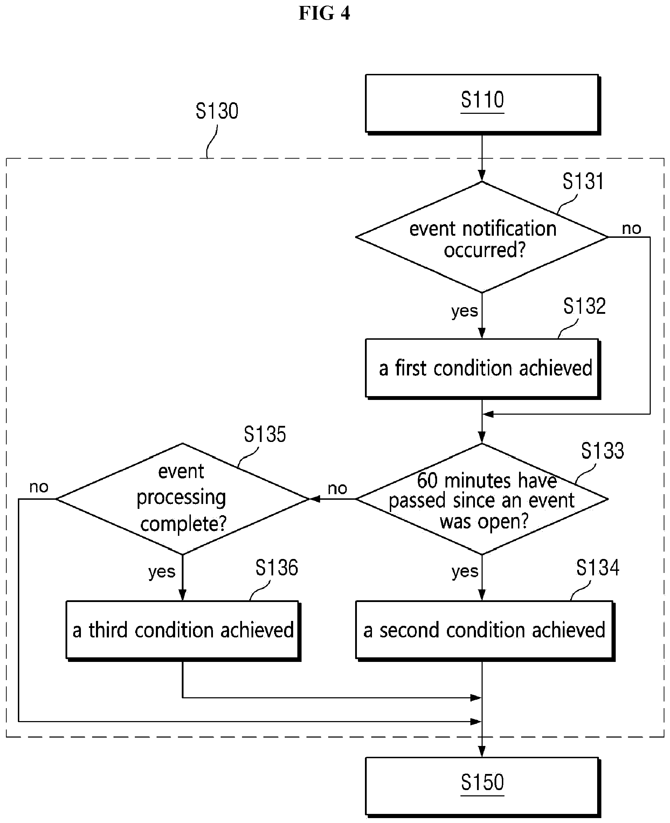

In step S130, conditions for sending the message for the occurred event to the client terminal 20 are verified with reference to the metadata 11 obtained in step S110. For example, assuming that the conditions for sending the message for the occurred event to the client terminal 20 are set in advance, it is determined whether such conditions are achieved by referring to each field value of the metadata 11. If the conditions are achieved, a message corresponding to the achieved conditions is sent to the client terminal 20 through steps S150 to S190. Conversely, if no conditions have been met, the message is not sent and the method for notifying the event is terminated. The conditions achieved for sending a message are not necessarily mutually exclusive. For example, when there are a plurality of conditions for sending a message, a result of referring to a specific metadata 11 may simultaneously achieve two or more of the above conditions. A detailed embodiment of this will be described later with reference to FIG. 4.

In step S150, depending on a verification result performed in step S130, it determines to which layer of a plurality of layers the message for the occurred event is to be sent, i.e., which of the plurality of layers is selected as a target recipient. As described above, at this point, there may be a vertical hierarchical relationship between the plurality of layers.

Specifically, when the condition verified to be achieved in step S130 is a condition for sending a lower level message (for example, 'event notification occurs'), a first layer, which is a lower layer, is determined as a target recipient for such a message. On the other hand, when the condition verified to be achieved in step S140 is a condition for sending a higher level message (for example, '60 minutes have passed since an event was open'), a second layer, which is a layer higher than the first layer, is determined as a target recipient such a message.

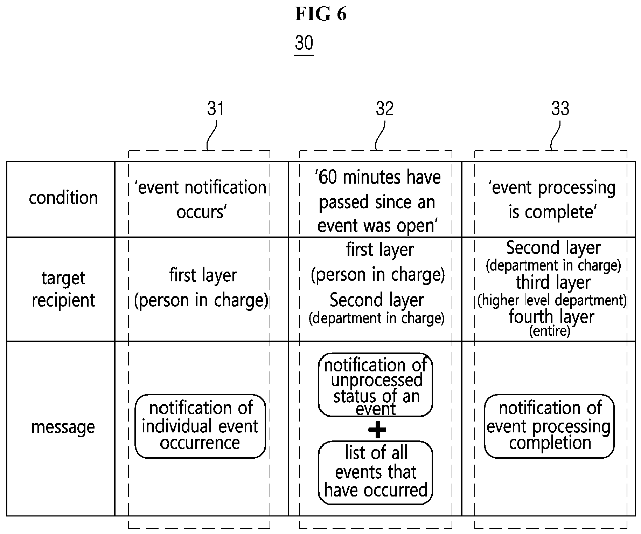

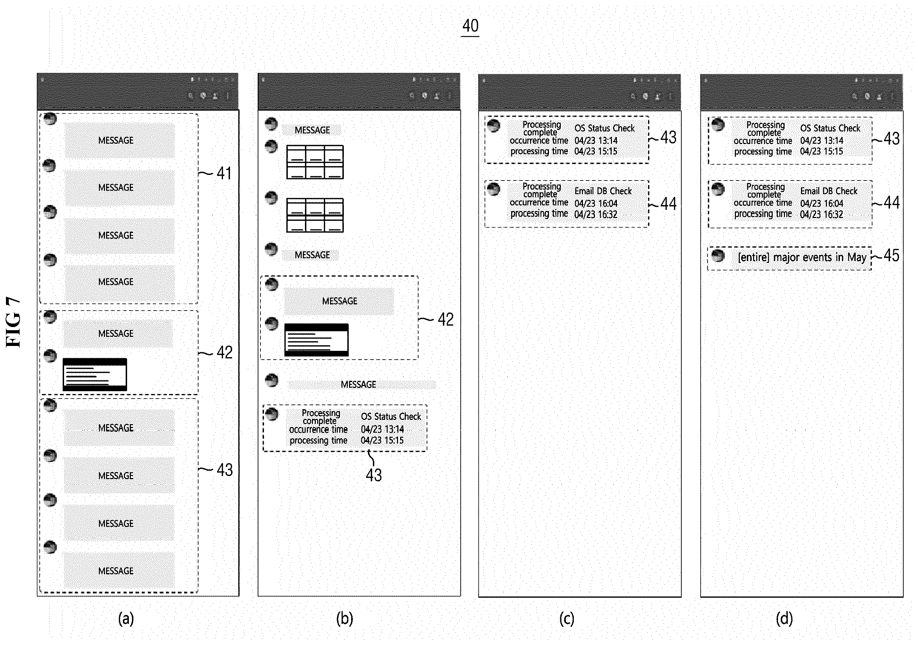

As an embodiment, the plurality of layers may be determined as the target recipient for one of the conditions depending on the achieved condition. For example, if a certain higher level message sending condition is achieved, the target recipient may be determined such that the same message is simultaneously sent to the lower layer as well as the corresponding higher layer. Specific practical application examples thereof will be described later with reference to FIGS. 6 and 7.

In step S170, a message to be sent to the client terminal 20 is generated. Here, which message to generate is determined based on the condition verified in step S130 or the target recipient determined in step S150, and in some cases, it may be determined in consideration of both the condition and the target recipient.

As an embodiment, when determining the message to be generated based on the verified condition in step S130, content of the message may be configured differently depending on the verified condition. For example, if the verified condition is 'event notification occurs', the content of the message includes content notifying the occurrence of the event in response. On the other hand, If the verified condition is '60 minutes have passed since an event was open,' the content of the message content includes content notifying that the event has been left unprocessed for some time.

As an embodiment, when determining a message generated based on the target recipient determined in step S150, a message type may be configured differently depending on a hierarchy of the target recipient. For example, when the target recipient is the first layer, the message generated in consideration of the characteristics of the lower layer that frequently receives a message for a specific event may include a message in a simple text form including only short sentences. On the other hand, when the target recipient is the second layer, the message generated in consideration of the characteristics of the higher layer, where more comprehensive information on a situation should be provided, may include a form including a thumbnail or a list showing a related event occurrence history in addition to a representative message in the form of text.

Naturally, considering the condition verified in step S130 and the target recipient determined in step S150 together, it is also possible to generate a message by including message content corresponding to the condition verified in step S130 in the form of a message corresponding to the target recipient determined in step S150.

In step S190, the generated message is sent by using the layer determined in step S150 as the target recipient. Here, the message may be sent through an interface (not shown) that performs a data transmission/reception function through a network.

As an embodiment, in the method for notifying the event according to the present invention, when sending a message to the determined target recipient, the message may be sent in a manner of notifying the message to a messenger chat room or a collaborative tool in which the target recipient participates through a messenger program running on the client terminal 20.

According to the method for notifying the event described in the present embodiment, by selectively sending the message for the event occurrence 10 depending on the hierarchy of the target recipient, the amount of messages received by each layer may be reduced, and only information that the layer needs to know may be selectively exposed. Accordingly, removing the inefficiency caused by the influx of a large amount of unnecessary messages, it is possible to obtain a benefit of significantly improving readability and concentration for messages containing necessary information.

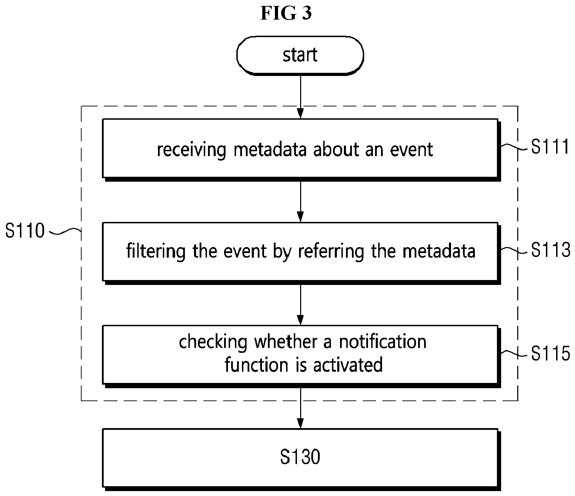

FIG. 3 is a flowchart embodying step S110 of FIG. 2 according to the embodiment of the present invention. As shown in FIG. 3, step S110 may be embodied in three steps of steps S111 to S115.

In step S111, the metadata 11 for the event occurred from an external system is received. Here, the external system may be a system to which the device 100 for notifying the event monitors an operation or a status. As an embodiment, the metadata 11 may be received from the external system in a separate form, and after receiving larger data including the metadata 11, the metadata 11 may be received in a manner of distinguishing the metadata 11 from it.

In step S113, event information is filtered with reference to the metadata 11. A detailed method for filtering event information has been described above with reference to FIG. 1, so a detailed description thereof is omitted here.

In step S115, it is checked whether a function for notifying a message for an event to the collaboration tool is activated. This function is useful when it is intended to block message notification to the collaboration tool at specific times or days of a week. In other words, the function to notify the message to the collaboration tool may be disabled so as not to immediately notify the collaborative tool even if an event occurs during non-business hours or holidays. In this case, the received metadata 11 is only stored in the history storage 150 (see FIG 1), and is not delivered to the notification controller 120.

According to the embodiment described in FIG. 3, the unnecessary metadata 11 are filtered through step S113, thereby reducing the parameters to be processed in the step after step S130 and minimizing the load applied to the system. In addition, since the message notification function is deactivated through step S115, the message is not sent to the collaboration tool. Therefore, it is possible to block the sending of business messages, which may occur unintentionally, in situations where business messages such as non-business hours or holidays must be avoided.

FIG. 4 is a flowchart embodying step S130 of FIG. 2 according to the embodiment of the present invention. As shown in FIG. 4, step S130 may be embodied in six steps of steps S131 to S136.

For simplicity of explanation, it is assumed in the present embodiment that there are the following three conditions as conditions for sending the message for the occurred event to the client terminal 20: a condition 'event notification occurs' indicating that a new event has occurred, a condition '60 minutes have passed since an event was open' indicating that the event was unprocessed 60 minutes after it occurred, and a condition 'event processing is complete' indicating that a previously occurred event has been processed. Here, the condition 'event notification occurs' is referred to as a first condition, the condition '60 minutes have passed since an event was open' is referred to as a second condition, and the condition 'event processing is complete' is referred to as a third condition.

Some of these conditions may be achievable simultaneously with other conditions, and some conditions may not be achievable simultaneously. For example, the first condition may be achieved simultaneously with the second condition depending on a situation of the system and a monitoring cycle. On the other hand, since the second condition and the third condition are mutually exclusive, if one is achieved, the other is not. In the present embodiment, considering the case, a flow is configured to continuously verify the second condition or the third condition even when the first condition is achieved. However, this is an example, and such a flow may be configured in a variety of other ways without departing from the spirit of the present invention.

In step S131, the first condition is verified by referring to the field values of the received metadata 11. If the received metadata 11 is for a newly occurred event, it is considered that the 'event notification occurs' is occurred. Then, it proceeds to step S132 and it is determined that the first condition has been achieved. After that, it proceeds to step S133. On the other hand, if the received metadata 11 is not related to the newly occurred event, it is considered that the 'event notification occurs' has not occurred and immediately proceeds to step S133.

In step S133, the second condition is verified by referring to the field values of the received metadata 11. Accordingly, if it is determined that the event that has occurred previously is in an unprocessed status such that 60 minutes have elapsed, it is considered that the '60 minutes have passed since an event was open' has occurred. Then, it proceeds to step S134, and it is determined that the second condition has been achieved. After that, it proceeds to step S150. Otherwise, it is considered that the '60 minutes have passed since an event was open' has not occurred, and proceeds to step S135 for verification of the third condition.

In step S135, the third condition is verified by referring to the field values of the received metadata 11. Accordingly, if it is determined that the event that has occurred has been processed, it is considered that the 'event processing is complete' has occurred. Then, it proceeds to step S136 and it is determined that the third condition has been achieved. After that, it proceeds to step S150. Otherwise, it is considered that the 'event processing is complete' has not occurred, and it immediately proceeds to step S150.

According to the embodiment of FIG. 4, if a preset condition is not achieved, a message is not sent even if the metadata 11 is received. Therefore, sending a pointless message may be eliminated. Further, it tags different achievement conditions depending on each situation in which a message should be sent. Therefore, in a later step, an appropriate target recipient may be selected depending on a status or situation of an external event and an appropriate message may be configured accordingly.

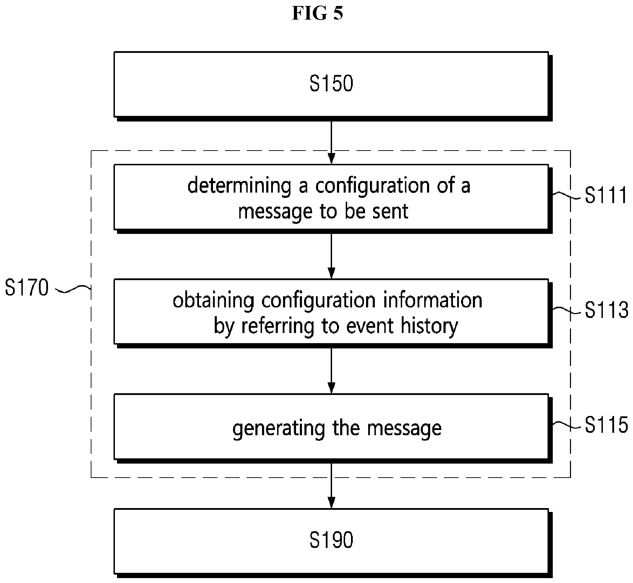

FIG. 5 is a flowchart embodying step S170 of FIG. 2 according to the embodiment of the present invention. As shown in FIG. 5, step S170 may be embodied in three steps of steps S171 to S175.

In step S171, a configuration of a message to be sent to the client terminal 20 is determined. Here, the detailed method for determining the configuration of the message to be sent was described in the description with reference to FIG. 1, so a detailed description thereof is omitted here.

In step S173, configuration information necessary to generate a message is obtained by referring to event history stored in the history storage 150 depending on the determined message configuration. For example, when the determined message configuration includes a thumbnail of events that have been occurred, it reads information of related messages stored in the history storage 150 and extracts items necessary for the thumbnail.

In step S175, the message to be sent is generated using the obtained configuration information, and when the message generation is completed, it proceeds to step S190.

FIGS. 6 and 7 are diagrams conceptually illustrating an actual implementation of the method for notifying the event according to the embodiment of the present invention.

A table 30 shown in FIG. 6 is a table to which a target recipient and a message for each condition are mapped in accordance with the method for notifying the event according to the present invention. In the present embodiment, as in FIG. 4 earlier, it is assumed that the conditions for sending a message include the condition 'event notification occurs', the condition '60 minutes have passed since an event was open', and the condition 'event processing is complete.'

Referring to the first part 31 of the table 30, When the condition 'event notification occurs' is achieved, a notification message for this is a lower level message to be delivered only to a person in charge for an actual task. Therefore, the first layer (a person in charge level) is mapped as the target recipient, and the configuration of the message to be sent is determined by a short message indicating the occurrence of an individual event.

Next, referring to the second part 32 of the table 30, when the condition '60 minutes have passed since an event was open' is achieved, this means that the event has not been processed for a certain period of time. Therefore, a message informing this is considered as an higher level message to be discussed at a departmental level, and the second layer (a department in charge level) is mapped as the target recipient. Further, a message to be sent is configured to have a representative message indicating a status of the unprocessed event, and a list of all events that have occurred so far.

As an embodiment, when it is necessary to notify the unprocessed event to the person in charge level at this point, the first layer (person in charge level) together with the second layer (department in charge level) may be simultaneously mapped to the target recipient as shown the figure.

Finally, referring to the third part 33 of the table 30, when the condition 'event processing is complete' is achieved, this means that the event that have been holding is resolved. Therefore, it is considered to notify all related departments, including higher-level departments, and it maps the target recipient to the second layer (department in charge level), the third layer (higher department level) and the fourth layer (all levels). Since the message to be sent only needs to indicate that the event has been processed, it is illustrated as a brief short message. However, this is just a simple example. Depending on a specific application example or application, the message may be configured to further include other information such as a thumbnail or a list of events that have occurred.

FIG. 7 is a screen 40 of the collaboration tool of the client terminal showing how a message is differently notified for each layer in an actual event occurrence situation. Referring to FIG. 7, according to a scenario mapped to the table 30 of FIG. 6, a message is differently displayed on a screen a of the collaboration tool of the first layer, a screen b of the collaboration tool of the second layer, a screen c of the collaboration tool of the third layer, and a screen d of the collaboration tool of the fourth layer, respectively.

First, when the condition 'event notification occurs' which is a lower level message (first condition) is achieved, the target recipient is the first layer. Therefore, a notification message 41 therefor is displayed only on the screen a of the collaboration tool of the first layer. The message at this point is in the form of a short message briefly indicating that an event has occurred.

If the condition '60 minutes have passed since an event was open' (second condition) is achieved after the event has been processed over time, the target recipients are the first layer and the second layer. Therefore, a notification message 42 therefor is displayed simultaneously on the screen a of the collaboration tool of the first layer and the screen b of the collaboration tool of the second layer. At this point, the message is a composite message type including a representative message indicating an unprocessed event and a thumbnail or list showing all events that have occurred so far.

When the condition 'event notification occurs' (first condition) repeatedly occurs afterward, a notification message 43 therefor is displayed only on the screen a of the collaboration tool of the first layer, as before.

When the event is finally processed and complete (third condition), the target recipients are the second layer, the third layer, and the fourth layer. Therefore, a notification message 43 therefor is displayed simultaneously on the screen b of the collaboration tool of the second layer, the screen c of the collaboration tool of the third layer, and the screen d of the collaboration tool of the fourth layer. At this point, the message is configured in the form of a brief short message because only the result of processing the message is notified.

So far, only examples in which the higher layers receive fewer messages have been described. However, depending on an application example of the method for notifying the event, the higher layer may receive more messages. For example, when an "all notice" message is sent that is notified only to the fourth layer (all levels), a corresponding message 45 is displayed only on the screen d of the collaboration tool of the fourth layer, and is not displayed on the screens a, b, and c of users of other layers.

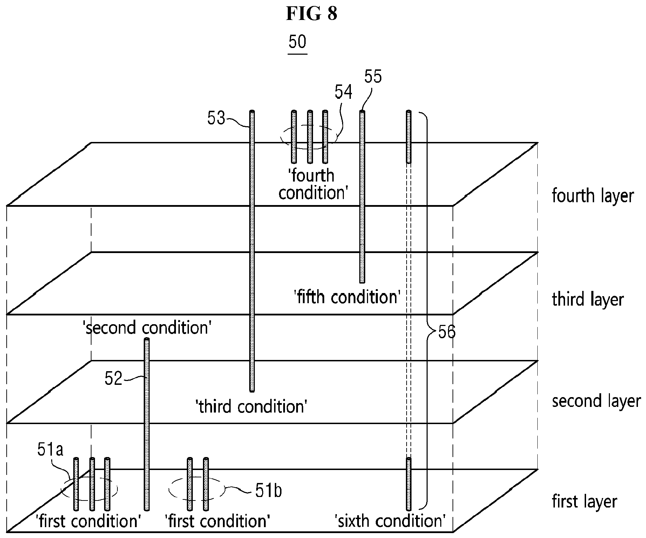

FIG. 8 is a diagram illustrating a vertical hierarchical structure of a target recipient referred to in some embodiments of the present invention. Referring to FIG. 8, a target recipient of a message sent through the method for notifying the event for the present invention includes a plurality of layers including a first layer, a second layer, a third layer, and a fourth layer.

The first layer is the lowest level and a person in charge level layer, and a person in charge who directly performs and processes a task belongs to it. In the case of the first layer, even when a relatively minor or minor event occurs, it must be managed and processed, so a message is most frequently notified. The second layer is a second higher level and a department level layer, and members of a department to which person in charges belong to, and include members of the first layer. In the case of the second layer, as in the case where the second condition described above occurs, a message is notified only in a situation in which a departmental unit should respond. Therefore, relatively fewer messages than the first layer are notified. The third layer is a higher department level layer to which the second layer belongs, and includes members of the second layer, in which a message is notified in a preset situation to notify a related message to the higher department. The fourth layer is an entire level layer to which all members of an organization belong, and receives messages for notifying all members.

Referring to the scenarios described above with reference to FIGS. 6 and 7 and showing a target recipient of a message in each case under the hierarchical structure of FIG. 8, when the first condition is achieved, the target recipient of the message is only the first layer. In FIG. 8, it is shown that message bars 51a and 51b by the first condition exist only in the first layer. Similarly, when the second condition is achieved, the target recipients are the first layer and the second layer, and a message bar 52 by the second condition is shown to exist in both the first layer and the second layer. Similarly, when the third condition is achieved, the target recipients are the second layer, the third layer, and the fourth layer. Therefore, a message bar 53 by the third condition is shown in the form starting from the second layer and passing through the third layer and extending to the fourth layer.

In FIGS. 6 and 7, only the case of the first condition, the second condition, and the third condition are illustrated, and a method for notifying a message to each layer is described. However, the embodiments of the present invention are not limited thereto. For example, it is possible to set various layer-specific notification conditions, such as a case 54 where a message is notified only in the fourth layer, which is the entire level, a case 55 where a message is notified only in the third and fourth layers, a case 56 where a message is notified only in the fourth layer which is the highest layer and the first layer which is the lowest layer, and execute a method for notifying a message of the present invention accordingly.

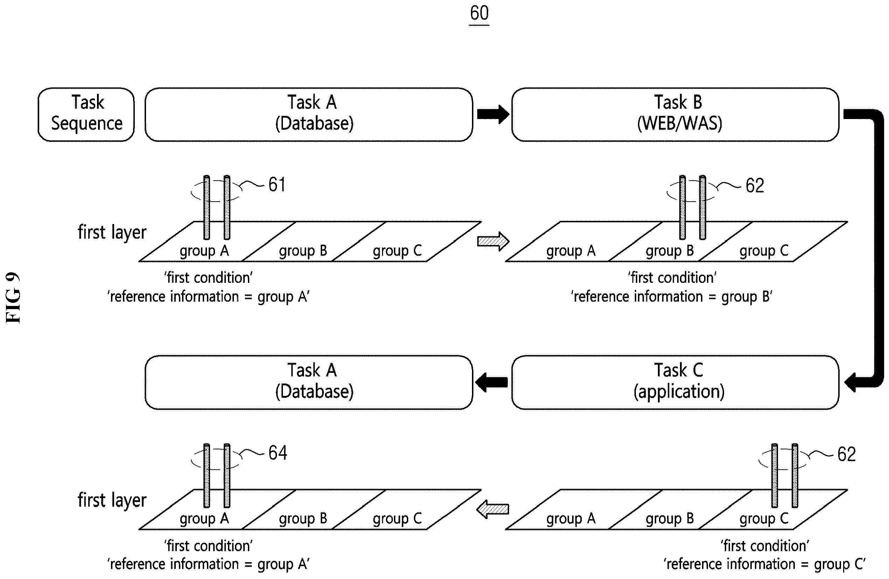

FIG. 9 is a view illustrating a horizontal classification structure of the target recipient according to the embodiment of the present invention.

Referring to FIG. 9, a layer (in the present embodiment, the first layer) determined as a target recipient among the plurality of layers includes a plurality of groups. At this point, the method for notifying the event according to the present invention may notify a message to only some of the plurality of groups depending on reference information indicating some of the plurality of groups. The present embodiment may be useful when there is a division of work within the same hierarchy.

For example, when it is divided into three groups of a group in charge of database (Group A), a group in charge of WEB/WAS (Group B), and a group in charge of an application (Group C) depending on their area of responsibility, within the same first layer, and when a sequence of tasks for processing an occurred event is sequentially in the order of i) database, ii) WEB/WAS, and iii) application, a message occurring at the beginning of an event is meaningful only for Group A, and Group B and Group C may be meaningless to be notified of a relevant message. In this case, when the reference information indicates Group A, the method for notifying the event does not send a message 61 to the entire first layer even if the determined target recipient is the first layer, but only Group A in the first layer indicated by the reference information.

When the task on the database is complete, the reference information is changed to indicate Group B in charge of the next step task (WEB/WAS) according to the sequence of the task, and a first layer message 62 subsequently generated is sent only to Group B.

When the task on the WEB/WAS is complete, the reference information is changed to indicate Group C in charge of the next step task (application) according to the sequence of the task, and a first layer message 63 subsequently generated is sent only to Group C.

This change of reference information is not necessarily changed in only one direction. For example, when the application task is complete in Group C, but a task order should be back to Group A, the reference information is changed to indicate Group A, again, and a first layer message 64 subsequently generated is sent only to Group A, again.

As an embodiment, the change of reference information in the present embodiment may be performed by inputting or executing a task sequence, time change, or a predetermined value. For example, when the reference information is changed depending on a predetermined task sequence as described above, the reference information may be automatically changed to indicate a group in charge of the next step task when a task in charge of a group currently indicated by the reference information is complete. Alternatively, when the reference information changes depending on the change of time, it may be changed such that the reference information indicates Group A from 00:00 to 08:00, the reference information indicates Group B from 08:00 to 16:00, and the reference information indicates Group C from 16:00 to 24:00. Alternatively, when the reference information is changed by inputting or executing a predetermined value, the reference information may be changed in a manner such that an administrator or a person in charge of a previous task subsequently enters or designates a group in charge of a task directly into the system.

So far, only a message is notified to a group indicated by the reference information. However, according to an embodiment, the reference information may indicate a group for not notifying a message. For example, the method for notifying the event for the present invention may also be configured such that when the reference information indicates Group A, a message for the first layer that occurs afterwards is only notified to Group B and Group C, but not to Group A.

According to the embodiment described in FIG. 9, when there is a division of task within the same hierarchy, the amount of messages received in each group unit in a layer may be reduced and only information that the group needs to know may be selectively exposed, by selectively sending a message only to a group directly related to a current event situation. Accordingly, it is possible to remove the inefficiency caused by the influx of a large amount of unnecessary messages, and at the same time, it is possible to obtain an effect of significantly improving readability and concentration for messages containing necessary information.

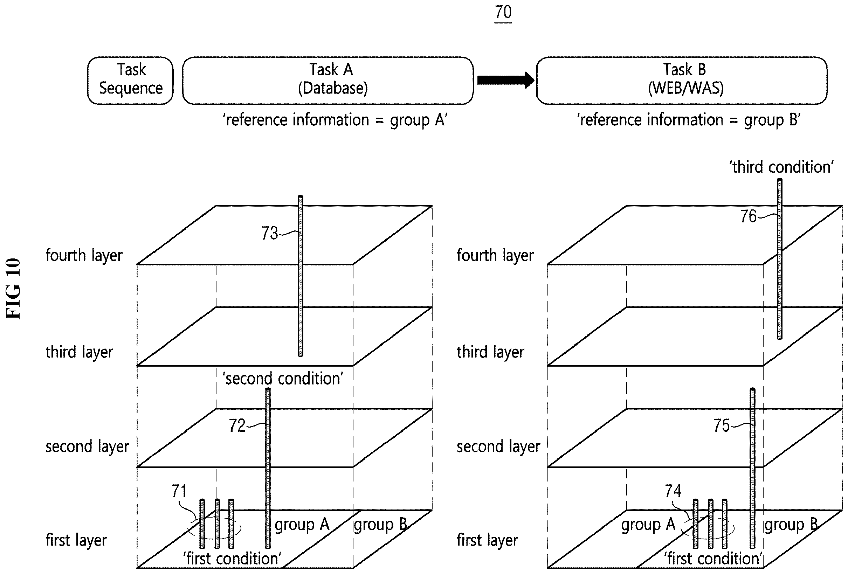

FIG. 10 is a diagram illustrating a composite classification structure in which the vertical hierarchy structure of FIG. 8 and the horizontal classification structure of FIG. 9 are applied together; Referring to FIG. 10, the target recipient includes the plurality of layers of the first to fourth layers, and the first layer includes two groups, Group A and Group B.

Here, it is assumed that the first condition, the second condition, and the third condition are respectively achieved, and a message corresponding to each is sent to the target recipient, and the reference information indicating a group to receive a message in the first layer indicates Group A (a current business phase is a database phase). In this case, a message corresponding to the first condition is sent to the first layer, and the reference information indicates Group A. Therefore, the message is received only in Group A and not in Group B (71). A message corresponding to the second condition is sent to the first layer and the second layer, and Group B still does not receive a message sent to the first layer. Therefore, the message is received only in Group A and the second layer (72). A message corresponding to the third condition is sent to the second layer, the third layer, and the fourth layer in the same way as other embodiments (73).

In addition, it is assumed that the database task is complete and the current task phase is changed to the WEB/WAS phase according to the task sequence. Accordingly, a group indicated by the reference information is also changed from Group A to Group B. In addition, it is assumed that once again, the first condition, the second condition, and the third condition are respectively achieved and a message corresponding to each is sent to a target recipient. In this case, the message corresponding to the first condition is sent to the first layer. However, since the reference information has been changed to indicate Group B, the message is received only in Group B and not in Group A (74). The message corresponding to the second condition is sent to the first layer and the second layer. Since the message sent to the first layer is notified only to Group B, the message is received at Group B and the second layer (75). Since the message corresponding to the third condition is not affected by the reference information, it is sent to the second layer, the third layer, and the fourth layer as described above (76).

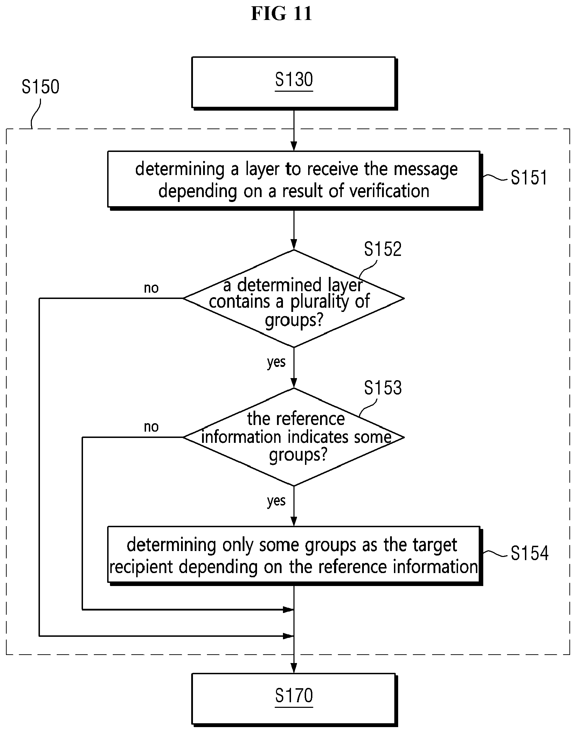

FIG. 11 is a flowchart embodying step S150 of FIG. 2 according to some embodiments of the present invention. As shown in FIG. 11, step S150 is embodied in four steps of steps S151 to S154, and the method for notifying the event for the present embodiment sends a message to a target recipient having the vertical hierarchical structure and the horizontal classification structure of FIGS. 8 to 10.

In step S151, a layer to receive a message is determined depending on a verification result in step S130. For example, if it is verified in step S130 that the first condition has been achieved, in step S151, the first layer is determined as the layer to receive the message.

In step S152, it is determined whether the determined layer includes a plurality of groups. If a corresponding layer (e.g., the first layer) includes the plurality of groups, the method for notifying the event proceeds to step S153 to determine whether only some of the groups correspond to a target recipient. Otherwise, it is considered that the entire layer is the target recipient, and the method for notifying the event immediately proceeds to step S170.

In step S153, it is determined whether the reference information indicates some groups. Here, as described above, the reference information is a value that is referenced to determine only some of groups within a specific layer as a target recipient. If the reference information indicates some groups, whether or not a message is received by each group in a corresponding layer (e.g., the first layer) may vary. Therefore, it proceeds to step S154 to determine it. Otherwise, the target recipient does not change for each group according to the reference information, so it proceeds directly to step S170.

In step S154, only some group of a plurality of groups in a corresponding layer (e.g., the first layer) is determined as a target recipient of a message according to the reference information. For example, when the reference information indicates Group A in the first layer, in the method for notifying the event for the present invention, only Group A is determined as the target recipient of the message, and the remaining Group B and Group C are determined not to be the target recipient of the message. Alternatively, complementarily to this, when the reference information indicates Group A in the first layer, in the method for notifying the event for the present invention, Group B and Group C which are not indicated by the reference information may be determined as the target recipient of the message, and the indicated Group A may be determined as not being the target recipient of the message. It is assumed that the reference information indicates only one group herein. However, this is exemplary, and the reference information may indicate two or more groups at the same time. Even in this case, since the fundamental operating principle is not changed, detailed examples in that case are omitted.

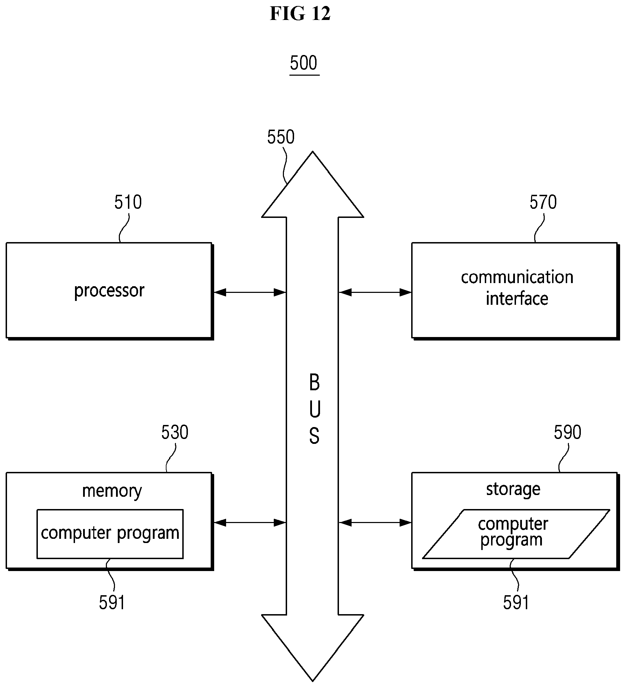

Hereinafter, an exemplary computing device 500 that can implement an apparatus and a system, according to various embodiments of the present disclosure will be described with reference to FIG 12.

FIG. 12 is an example hardware diagram illustrating a computing device 500.

As shown in FIG. 12, the computing device 500 may include one or more processors 510, a bus 550, a communication interface 570, a memory 530, which loads a computer program 591 executed by the processors 510, and a storage 590 for storing the computer program 591. However, FIG 12 illustrates only the components related to the embodiment of the present disclosure. Therefore, it will be appreciated by those skilled in the art that the present disclosure may further include other general purpose components in addition to the components shown in FIG. 12.

The processor 510 controls overall operations of each component of the computing device 500. The processor 510 may be configured to include at least one of a Central Processing Unit (CPU), a Micro Processor Unit (MPU), a Micro Controller Unit (MCU), a Graphics Processing Unit (GPU), or any type of processor well known in the art. Further, the processor 510 may perform calculations on at least one application or program for executing a method/operation according to various embodiments of the present disclosure. The computing device 500 may have one or more processors.

The memory 530 stores various data, instructions and/or information. The memory 530 may load one or more programs 591 from the storage 590 to execute methods/operations according to various embodiments of the present disclosure. An example of the memory 530 may be a RAM, but is not limited thereto.

The bus 550 provides communication between components of the computing device 500. The bus 550 may be implemented as various types of bus such as an address bus, a data bus and a control bus.

The communication interface 570 supports wired and wireless internet communication of the computing device 500. The communication interface 570 may support various communication methods other than internet communication. To this end, the communication interface 570 may be configured to comprise a communication module well known in the art of the present disclosure.

The storage 590 can non-temporarily store one or more computer programs 591. The storage 590 may be configured to comprise a non-volatile memory, such as a Read Only Memory (ROM), an Erasable Programmable ROM (EPROM), an Electrically Erasable Programmable ROM (EEPROM), a flash memory, a hard disk, a removable disk, or any type of computer readable recording medium well known in the art.

The computer program 591 may include one or more instructions, on which the methods/operations according to various embodiments of the present disclosure are implemented. When the computer program 591 is loaded on the memory 530, the processor 510 may perform the methods/operations in accordance with various embodiments of the present disclosure by executing the one or more instructions.

The technical features of the present disclosure described so far may be embodied as computer readable codes on a computer readable medium. The computer readable medium may be, for example, a removable recording medium (CD, DVD, Blu-ray disc, USB storage device, removable hard disk) or a fixed recording medium (ROM, RAM, computer equipped hard disk). The computer program recorded on the computer readable medium may be transmitted to other computing device via a network such as internet and installed in the other computing device, thereby being used in the other computing device.

Although the operations are shown in a specific order in the drawings, those skilled in the art will appreciate that many variations and modifications can be made to the preferred embodiments without substantially departing from the principles of the present invention. Therefore, the disclosed preferred embodiments of the invention are used in a generic and descriptive sense only and not for purposes of limitation. The scope of protection of the present invention should be interpreted by the following claims, and all technical ideas within the scope equivalent thereto should be construed as being included in the scope of the technical idea defined by the present disclosure.

## Claims

1. A method for notifying an event, the method being performed by a computing device, the method comprising:
obtaining metadata about the event that has occurred;
verifying conditions for sending a message related to the event with reference to a value of the metadata, the conditions comprising a first condition and a second condition;
determining a target recipient to receive the message, depending on a result of verifying the conditions, the target recipient comprising a layer selected among a plurality of hierarchical layers comprising a first layer and a second layer higher than a first layer, wherein, when the first condition is met, the target recipient is determined to be the first layer, and wherein when the second condition is met, the target recipient is determined to include the second layer;
generating a first message when the target recipient is the first layer and a second message when the target recipient includes the second layer; and
sending the message to the determined target recipient.

2. The method of claim 1, wherein the determining of the target recipient comprises:
checking whether the layer determined as the target recipient includes a plurality of groups; and
determining, if the determined layer includes the plurality of groups, only one or more groups among the plurality of groups as the target recipient according to reference information comprising information indicating the one or more groups among the plurality of groups.

3. The method of claim 2, wherein the one or more groups indicated by the reference information are changed by a task sequence, change in time, or input or execution of a predetermined value.

4. The method of claim 1,
wherein the first message and the second message are different from each other.

5. The method of claim 4, wherein, when the second message is generated, the second message includes at least one of a representative message, a list, and a thumbnail of a plurality of notification messages sent as the lower level message at different times.

6. The method of claim 1, wherein obtaining the metadata further comprises:
receiving the metadata about the event; and
filtering the metadata by referring to a field value of the metadata.

7. The method of claim 6, wherein obtaining the metadata further comprises:
checking whether a notification function for the event is activated.

8. The method of claim 1, wherein the metadata comprises grade, ID, object, occurrence time, status, and service category of the event.

9. The method of claim 1, wherein the message is notified to a collaboration tool in which the layer determined as the target recipient participates through a messenger program running on a client terminal.

10. The method of claim 1, wherein, when the second condition is met, the target recipient is determined to be only the second layer.

11. The method of claim 1, wherein, when the second condition is met, the target recipient is determined to be the first layer and the second layer.

12. A device for notifying an event, comprising:
a processor;
a memory to load a computer program executed by the processor; and
a non-transitory storage medium to store the computer program,
wherein the computer program comprises instructions to perform actions:
to obtain metadata about the event that has occurred;
to verify conditions for sending a message related to the event with reference to a value of the metadata, the conditions comprising a first condition and a second condition;
to determine a target recipient to receive the message, depending on a result of verifying the conditions, the target recipient comprising a layer selected among a plurality of hierarchical layers comprising a first layer and a second layer higher than a first layer, wherein, when the first condition is met, the target recipient is determined to be the first layer, and wherein when the second condition is met, the target recipient is determined to include the second layer;
to generate a first message when the target recipient is the first layer and a second message when the target recipient includes the second layer; and
to send the message to the determined target recipient.

13. A computer program stored on a computer readable recording medium, the computer program being combined with a computing device to perform a method for notifying an event, wherein the method comprises:
obtaining metadata about the event that has occurred;
verifying conditions for sending a message related to the event with reference to a value of the metadata, the conditions comprising a first condition and a second condition;
determining a target recipient to receive the message, depending on a result of verifying the conditions, the target recipient comprising a layer selected among a plurality of hierarchical layers comprising a first layer and a second layer higher than a first layer, wherein, when the first condition is met, the target recipient is determined to be the first layer, and wherein when the second condition is met, the target recipient is determined to include the second layer;
generating a first message when the target recipient is the first layer and a second message when the target recipient includes the second layer; and
sending the message to the determined target recipient.
